# EUROPEAN PATENT APPLICATION

(11) **EP 4 682 809 A1**
(43) Date of publication of application: **21.01.2026**
(21) Application number: 25157033.9
(22) Date of filing: 11.02.2025
(51) Int. Cl.: G06Q 30/0601

(54) **INFORMATION PROCESSING SYSTEM, PROGRAM, AND INFORMATION PROCESSING METHOD**

(30) Priority: 19.07.2024 JP 2024116238
(71) Applicant: FUJIFILM Business Innovation Corp., Minato-ku Tokyo (JP)
(72) Inventor: ARAKAWA, Kei, Yokohama-shi (JP); AOKI, Yasuharu, Yokohama-shi (JP)
(74) Representative: Haseltine Lake Kempner LLP

(57) **Abstract**

An information processing system includes a processor configured to: output information on a workload of a creation process corresponding to new order information by inputting to a model the new order information on a printed material, the model being pre-learned such that, when order information on a printed material is input, information on the workload involved in the creation process that determines specifications or design of the printed material is output.

## Description

### Background

### (i) Technical Field

The present disclosure relates to an information processing system, a program, and an information processing method.

### (ii) Related Art

Japanese Unexamined Patent Application Publication No. 2021-26535 discloses a printing ordering system that places a printing order to a factory of a contractor. The printing order system identifies the type of paper and the amount of paper used in the factory in accordance with information collected from the factory and transmits the identified type of paper and amount of paper to a supplier of the used paper.

A printed material includes multiple components, the components are manufactured through respective manufacturing steps, and a complex manufacturing flow is thus involved.

Since a large factory includes large amounts of resources (equipment and personnel), there are numerous patterns according to which the components are manufactured. A manufacturing plan may thus be made.

Change requests from clients in specifications or design of a printed material are frequently made in printing industry, and the manufacturing plan is thus changed each time.

Whether a change in the specifications or design on a printed material occurs is not certain and it is difficult to estimate a workload involved in the creation process that determines the specifications or design. This may lead to a heavy load when an operator makes the manufacturing plan.

### Summary

Accordingly, it is an object of the present disclosure to provide an information processing system, a non-transitory computer readable medium, and an information processing method that predict a workload involved in a creation process that determines specifications or design on a printed material.

According to a first aspect of the present disclosure, there is provided an information processing system including: a processor configured to: output information on a workload of a creation process corresponding to new order information by inputting to a model the new order information on a printed material, the model being pre-learned such that, when order information on a printed material is input, information on the workload involved in the creation process that determines specifications or design of the printed material is output.

In the information processing system according to a second aspect in view of the first aspect, the order information and the new order information include information on order details related to the specifications or the design of the printed material from a purchaser.

In the information processing system according to a third aspect in view of the second aspect, the information on the order details includes a text or a voice input when the purchaser communicates with a contractor.

In the information processing system according to a fourth aspect in view of the second aspect, the information on the order details includes information on presence or absence of a predetermined keyword in a text or a voice input when the purchaser communicates with a contractor.

In the information processing system according to a fifth aspect in view of one of the first through fourth aspects, the order information and the new order information include information identifying a purchaser.

In the information processing system according to a sixth aspect in view of one of the first through fifth aspects, the order information and the new order information include information on a delivery date of the printed material.

In the information processing system according to a seventh aspect in view of one of the first through sixth aspects, the order information and the new order information include an image on the specifications or the design of the printed material.

In the information processing system according to an eighth aspect in view of one of the first through seventh aspects, the information on the workload involved in the creation process includes a workload related to the whole creation process, a number of changes in the specifications or the design of the printed material or a workload of a creator creating the design of the printed material.

According to a ninth aspect of the present disclosure, there is provided a program causing a computer to execute a process, the process including: outputting information on a workload of a creation process corresponding to new order information by inputting to a model the new order information on a printed material, the model being pre-learned such that, when order information on a printed material is input, information on the workload involved in the creation process that determines specifications or design of the printed material is output.

According to a tenth aspect of the present disclosure, there is provided an information processing method comprising: outputting information on a workload of a creation process corresponding to new order information by inputting to a model the new order information on a printed material, the model being pre-learned such that, when order information on a printed material is input, information on the workload involved in the creation process that determines specifications or design of the printed material is output.

According to the first or tenth aspect, the workload of the creation process may be predicted from the order information of the printed material.

According to the second aspect, the workload of the creation process may be predicted in accordance with the order details from the purchaser.

According to the third aspect, the workload of the creation process may be predicted in accordance with the text or the voice input when the purchaser communicates with the contractor.

According to the fourth aspect, the workload of the creation process may be predicted in accordance with the text or the voice input when the purchaser communicates with the contractor.

According to the fifth aspect, the workload of the creation process may be predicted in accordance with the information identifying the purchaser.

According to the sixth aspect, the workload of the creation process may be predicted in accordance with the delivery of the printed material.

According to the seventh aspect, the workload of the creation process may be predicted in accordance with the image related to the specifications or design of the printed material.

According to the eighth aspect, the workload of the creation process may be predicted from the order information on the printed material in accordance with the workload of the whole creation process, the number of changes in the specifications or design of the printed material, or the workload of the creator creating the design of the printed material.

According to the ninth aspect, the workload of the creation process may be predicted from the order information of the printed material.

### Brief Description of the Drawings

Exemplary embodiment of the present disclosure will be described in detail based on the following figures, wherein:
Fig. 1 schematically illustrates an information processing system of an exemplary embodiment;
Fig. 2 is a block diagram illustrating an electrical system of a printer in the information processing system of the exemplary embodiment;
Fig. 3 is a block diagram illustrating an electrical system of a server and a management apparatus in the information processing system of the exemplary embodiment;
Fig. 4 is a functional block diagram illustrating a functional configuration of the management apparatus in the information processing system of the exemplary embodiment;
Fig. 5 is a functional block diagram illustrating a functional configuration of the server in the information processing system of the exemplary embodiment;
Fig. 6 illustrates an example of a learned neural network model;
Fig. 7 is a flowchart illustrating an example of a process flow of a learning process performed on the server in the information processing system of the exemplary embodiment; and
Fig. 8 is a flowchart illustrating an example of a process flow of an estimation process performed on the server in the information processing system of the exemplary embodiment.

### Detailed Description

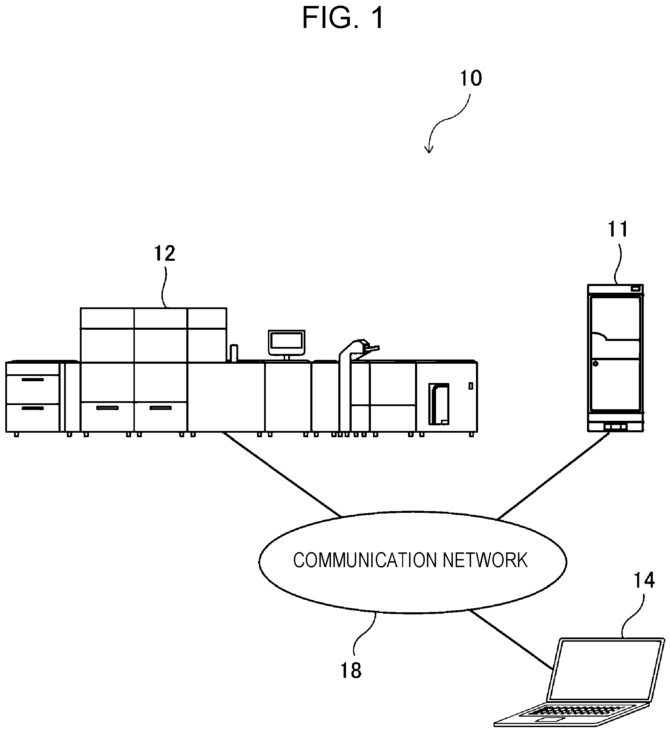

An example of an exemplary embodiment of the disclosure is described in detail below with reference to the drawings. The exemplary embodiment is related to an information processing system 10 in which a management apparatus, printer, client computer and the like are interconnected to each other via a communication network including a variety of networks. Fig. 1 schematically illustrates the information processing system 10 of the exemplary embodiment.

Referring to Fig. 1, the information processing system 10 of the exemplary embodiment includes a server 11, printer 12, and management apparatus 14. The server 11, printer 12, and the management apparatus 14 are connected to each other via a communication network 18 including a local-area network (LAN), wide-area network (WAN), Internet and/or Intranet. The server 11, printer 12, and management apparatus 14 may exchange a variety of data with each other via the communication network 18. According to the exemplary embodiment, the printer 12 performs printing corresponding to a print instruction when the print instruction is provided to the printer 12 from the management apparatus 14.

Referring to Fig. 1, the information processing system 10 incudes a single server 11 or multiple servers 11, single printer 12 or multiple printers 12, and single management apparatus 14 or multiple management apparatuses 14.

The printer 12 of the exemplary embodiment has multiple functions including a printing function that performs a printing process, and a post-process function that performs a post-process on the printed paper and other functions. The multiple functions may include a reading function that obtains image information representing a document by reading the document, a copying function that copies an image recorded on a document to a paper sheet, a facsimile function that transmits or receives a variety of data via a telephone network (not illustrated), a transfer function that transfers document information, such as image information that is read by the reading function, and a storage function that stores the read image information.

In the following discussion, the facsimile function, reading function, printing function and copying function may be occasionally respectively referred to as fax, scan, print and copy.

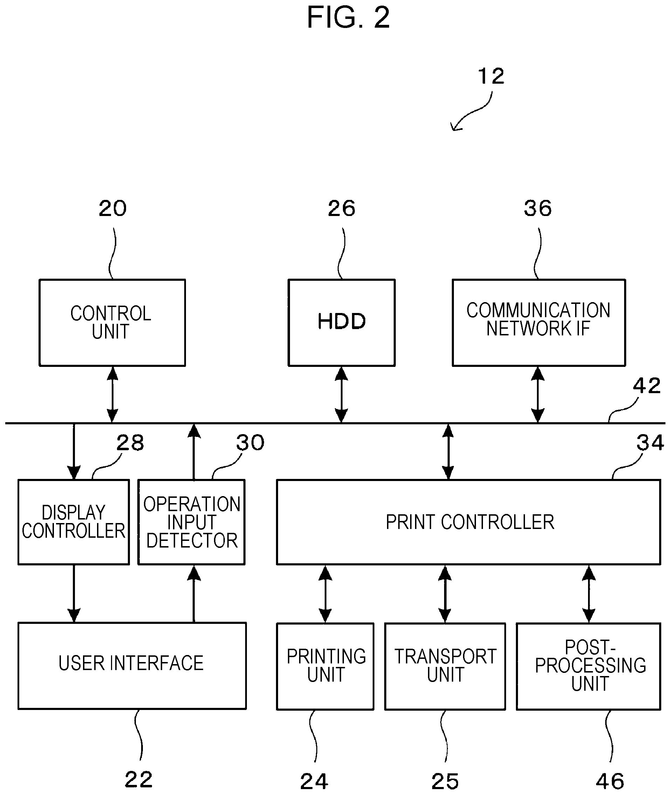

Fig. 2 is a block diagram illustrating an electrical configuration of the printer 12 in the information processing system 10 of the exemplary embodiment.

Referring to Fig. 2, the printer 12 of the exemplary embodiment may include a control unit 20. The control unit 20 may include a central processing unit (CPU), read-only memory (ROM) and random-access memory (RAM).

The printer 12 of the exemplary embodiment further includes a hard disk drive (HDD) 26 that stores a variety of data, application programs and the like. The printer 12 further includes a display controller 28 that is connected to a user interface 22 and controls displaying of a variety of screens on a display of the user interface 22. The printer 12 further includes an operation input detector 30 that is connected to the user interface 22 and detects an operation instruction input via the user interface 22. In the printer 12, a system bus 42 is electrically connected to the HDD 26, display controller 28 and operation input detector 30. In the printer 12 of the exemplary embodiment, a memory is the HDD 26 but alternatively, may be a non-volatile memory, such as a flash memory. In the exemplary embodiment, the user interface 22 is a touch panel that serves as a display capable of receiving an operational input but alternatively, the user interface 22 may include a display and an operation unit that are separate from each other.

The printer 12 of the exemplary embodiment includes a print controller 34 that controls a printing process of a printing unit 24, transport operation of a transport unit 25 transporting a paper sheet to the printing unit 24, and post-process of a post-processing unit 46. The printer 12 may further include a reading controller that controls a reading operation of an optical document reader optically reading an image and a document transport operation of a document transport unit. The printer 12 includes a communication network interface 36 that is connected to the communication network 18 and exchanges communication data with another external apparatus, such as the management apparatus 14 connected to the communication network 18. The printer 12 may include a fax interface 38 that is connected to a telephone line (not illustrated) and exchanges fax data with a fax device connected to the telephone line. The printer 12 may include a transmission-reception controller that controls transmission and reception of the fax data via the fax interface 38. The print controller 34 and communication network interface 36 are electrically connected to the system bus 42 in the printer 12.

The control unit 20 in the printer 12 of the exemplary embodiment thus configurated controls an operation screen of the display of the user interface 22 and a display operation of information, such as a variety of messages, via the display controller 28. The control unit 20 in the printer 12 controls operations of the printing unit 24, transport unit 25, and post-processing unit 46 via the print controller 34 and exchange of the communication data via the communication network interface 36. The control unit 20 in the printer 12 recognizes operation contents on the user interface 22 in accordance with operation information detected by the operation input detector 30 and thus performs a variety of controls in response to the operation contents.

Applications stored on the HDD 26 include, for example, an application for printing in the exemplary embodiment.

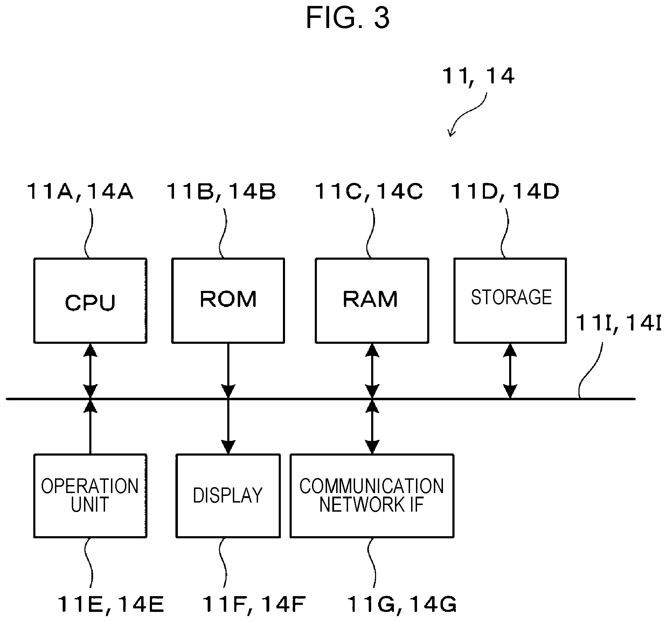

The electrical configuration of the server 11 and management apparatus 14 of the exemplary embodiment is described below. Fig. 3 is a block diagram illustrating the electrical configuration of the server 11 and management apparatus 14 in the information processing system 10 of the exemplary embodiment. The server 11 and management apparatus 14 have a typical computer configuration and only the server 11 is described herein.

As illustrated in Fig. 3, the server 11 of the exemplary embodiment includes a CPU 11A, ROM 11B, RAM 11C, storage 11D, operation unit 11E, display 11F and communication network interface 11G. The CPU 11A controls the whole operation of the server 11. The ROM 11B pre-stores a variety of control programs and a variety of parameters. The RAM 11C is used as a working area when the CPU 11A executes the programs. The storage 11D stores a variety of data and application programs. The operation unit 11E is used to input a variety of information. The display 11F is used to display a variety of information. The communication network interface 11G is connected to the communication network 18 and exchanges a variety of data with another apparatus connected to the communication network 18. The communication network interface 11G may be configurated to communicate with apparatuses using a variety of wireless communications of the related art. The elements of the server 11 described above are electrically connected to each other via a system bus 11I. The storage 11D is used in the server 11 of the exemplary embodiment but alternatively, a non-volatile memory, such as an HDD or flash memory, may be used in the server 11.

The CPU 11A in the server 11 of the exemplary embodiment thus configurated accesses the ROM 11B, RAM 11C and storage 11D, retrieves a variety of data from these memories via the operation unit 11E and displays a variety of information on the display 11F. The CPU 11A in the server 11 controls exchange of communication data via the communication network interface 11G.

The management apparatus 14 in the information processing system 10 thus configurated manages a series of manufacturing processes. The series of manufacturing processes include a creation process, pre-press process, pressplate process, printing process, processing process and delivery process.

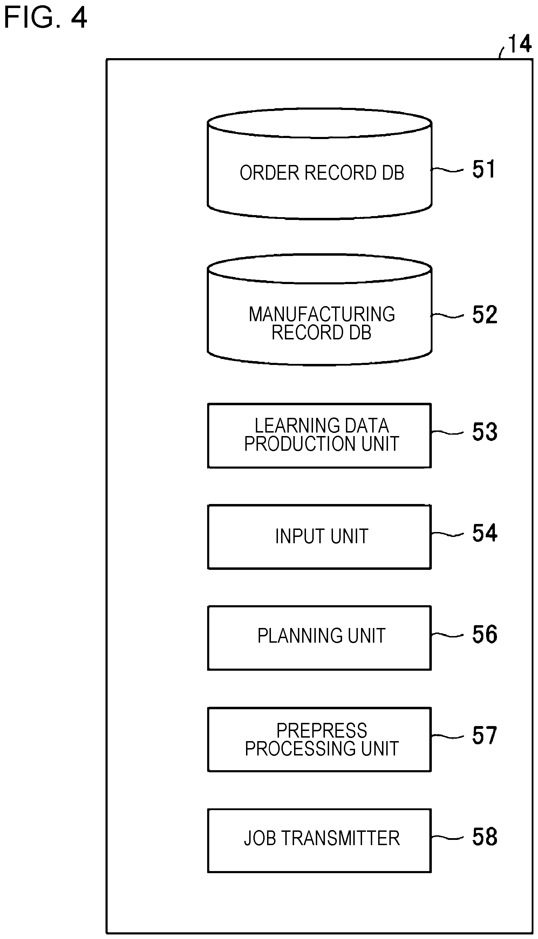

Functional configuration of the management apparatus 14 is described below. Fig. 4 is a block diagram illustrating the functional configuration of the management apparatus 14.

The management apparatus 14 is functionally configurated as illustrated in Fig. 4 to include an order record database (DB) 51, manufacturing record DB 52, learning data production unit 53, input unit 54, planning unit 56, prepress processing unit 57, and job transmitter 58.

The order record DB 51 store record information on orders of printed materials. The record information on the orders of the printed materials includes, for example, information identifying a company serving as a purchaser, information identifying a person in charge in the company, delivery information, and information related to order details. The information on the order details includes a text or a voice input when the purchaser and a contractor communicate with each other.

The manufacturing record DB 52 stores record information on the manufacturing of a printed material. The record information on the manufacturing of the printed material includes information on a workload of a creation process. The information on the workload of the creation process includes, for example, a workload of the whole creation process, the number of changes in specifications or design of the printed material or a workload of a creator creating the design of the printed material.

The record information on the manufacturing of printed material includes a text or a voice related to a change in the specifications or design of the printed material input when the purchaser communicates with the contractor or includes data file information prior to or subsequent to the change in the specifications or design of the printed material. The record information on the manufacturing of the printed material includes difference information on how much the change in the specifications or design of the printed material has affected a production schedule. The record information on the manufacturing of the printed material includes actual manufacturing information related to what devices, paper, and equipment are used in the manufacturing of the printed material.

The learning data production unit 53 produces learning data including a pair of a piece of order information on a printed material ordered in the past and a piece of information related to the workload of the creation process.

The order information may include information on the order details related to the specifications or design of the printed material. The information on the order details may include a text or a voice input when the purchaser communicates with the contractor. For example, the information on the order details includes a free text in a mail or an order form exchanged between the purchaser and the contractor or a phone voice between the purchaser and the contractor.

The information on the order details may include information on the presence or absence of a predetermined keyword in a text or a voice input when the purchaser communicates with the contractor. The predetermined keyword is an expression of a request change to the specification or design from the purchaser. Specifically, the predetermined keyword may include a word clearly related to the manufacturing process, for example, a "typographical error," or "position of ..." The predetermined keyword may include "paper," "printing," "print," or "register mark," clearly related to the creation process. The predetermined keyword may also include a word, such as "brightness," or "color," related to both the creation process and the manufacturing process and an expression indicating a target in a correction of each of the creation process and the manufacturing process (for example, "of ..." or "generally shade is").

Information on the presence or absence of the predetermined keyword may be obtained by performing a pre-process that extracts the predetermined keyword from a text or a voice input when the purchaser communicates with the contractor.

The learning data production unit 53 retrieves from the order record DB 51 in the management apparatus 14 the information on the order details.

The information on the order details may include information identifying the purchaser. The information identifying the purchaser may include information identifying a company as the purchaser and information identifying a person in charge in the company.

Specifically, the information identifying the company as the purchaser includes the name of the company as the purchaser and the identity (ID) of the company.

The learning data production unit 53 retrieves from the order record DB 51 in the management apparatus 14 the information identifying the purchaser.

The order information may include information on the delivery of the printed material. The information on the delivery of the printed material incudes a time period or date indicating the delivery of the printed material.

The learning data production unit 53 retrieves from the order record DB 51 in the management apparatus 14 the information on the delivery of the printed material.

The order information may include an image related to the specifications or design of the printed material. The image related to the specifications or design of the printed material includes, for example, an image as a rough drawing representing the specifications or design of the printed material.

The learning data production unit 53 retrieves from the order record DB 51 in the management apparatus 14 the image related to the specifications or design of the printed material.

The learning data production unit 53 calculates the information on the workload of the creation process from information on a result processed by the printer 12 that processes multiple print jobs.

The information on the workload of the creation process includes a workload of the whole creation process, the number of changes in the specifications or design of the printed material, and a workload of the creator creating the design of the printed material.

Specifically, an operator inputs to the management apparatus 14 the information on the result. The information on the result related to the printing of the printed material which the operator is in charge of includes the workload of the whole creation process, the number of changes in the specifications or design of the printed material, and the workload of the creator creating the design of the printed material. The management apparatus 14 manages the information on the result as log information on the manufacturing record DB 52.

The learning data production unit 53 retrieves from the manufacturing record DB 52 in the management apparatus 14 the information on the workload of the creation process.

The input unit 54 receives new order information input by the user. The user accesses Web user interface (WebUI) via a browser displayed on, for example, a user terminal and inputs the new order information via WebUI.

The planning unit 56 communicates with the server 11 concerning the new order information and retrieves the information on the workload of the creation process. Using a learned model, the server 11 then outputs the information on the workload of the creation process.

The planning unit 56 determines the manufacturing process, equipment, and schedule related to the new order information, in accordance with the information on the workload of the creation process retrieved from the server 11.

The preprocess processing unit 57 performs the prepress process including preflight, imposition, attaching a barcode, and attaching a watermark.

The job transmitter 58 transmits to the printer 12 print information and information on a print job.

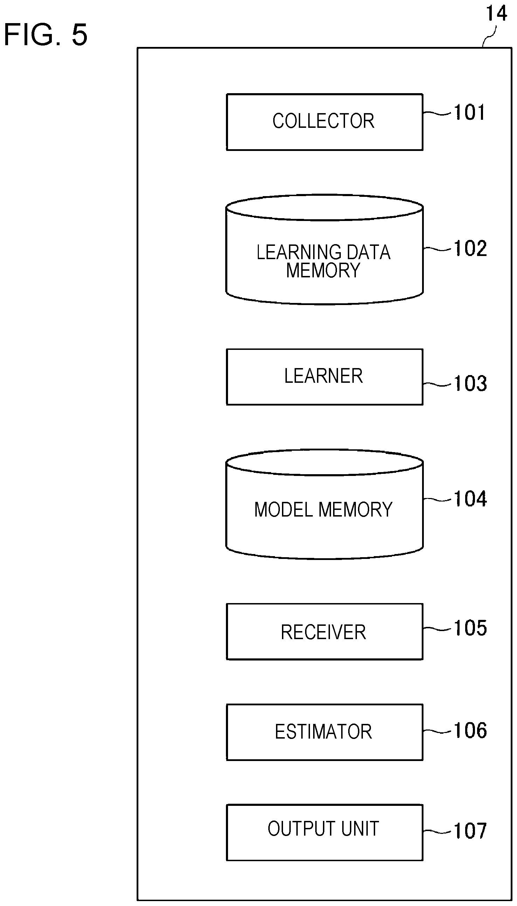

The functional configuration of the server 11 is described below. Fig. 5 is a block diagram illustrating the functional configuration of the server 11.

The server 11 is functionally configurated as illustrated in Fig. 5 to include a collector 101, learning data memory 102, learner 103, model memory 104, receiver 105, estimator 106 and output unit 107.

The collector 101 collects learning data including a pair of a piece of order information on a printed material order in the past and a pair of piece of information on the workload of the creation process.

The learning data memory 102 stores multiple pieces of learning data collected by the collector 101.

The learner 103 constructs in accordance with the pieces of learning data a neural network model that receives the order information and estimates the information on the workload of the creation process.

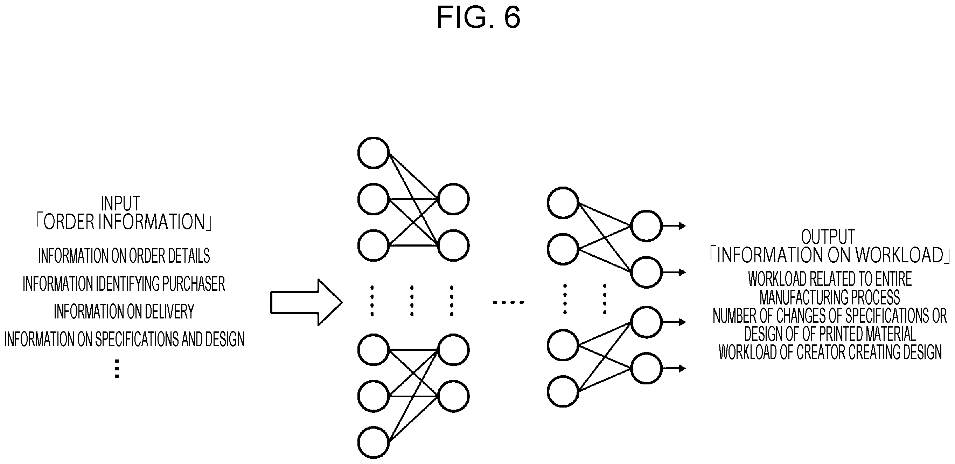

Specifically, the learned neural network model receives the input information that includes at least one piece selected from the group consisting of the information on the order details, the information identifying the purchaser, the information on the delivery, and the image of the specifications or design. The learned neural network model outputs, as the information on the workload of the creation process corresponding to the order information, at least one piece selected from the group consisting of the workload of the whole creation process, the number of changes in the specifications or design of the printed material, and the workload of the creator creating the design (see Fig. 6). Deep learning may be used as an example of an learning algorithm and the neural network model may be constructed such that the information on the workload of the creation process of the learning data is output when the order information of the learning data is received.

Specifically, the information on the workload of the creation process is estimated as the output of the model with the model receiving the order information on the learning data, the estimated information on the workload of the creation process is compared with the information on the workload of the creation process of the learning data, an error between these pieces of information on the workload of the creation process is calculated, and parameters of the model may be updated in a manner such that the value of the error is minimized.

Correlation between the order information and the information on the workload of the creation process is described below.

The information on the order details may help determine which of the creation process or the manufacturing process excluding the creation process a client is particular about, namely, creation of contents or the manufacturing the client is particular about. The process which the client is particular about may be scheduled with margin assigned with priority. In this way, there is a correlation between the information on the order details and the information on the workload of the creation process.

The information identifying the purchaser may help determine which of the creation of contents or the manufacturing the client is particular about. In this way, there is a correlation between the information identifying the purchaser and the information on the workload of the creation process.

The information on the delivery may help determine which of the creation of contents or the manufacturing the client is particular about and whether the printed material is to be delivered quickly. In this way, there is a correlation between the information on the delivery and the information on the workload of the creation process.

The image related to the specifications or design may help determine which of the creation of contents or the manufacturing the client is particular about. In this way, there is a correlation between the information on the specifications or design and the information on the workload of the creation process.

The model memory 104 stores the learned neural network model

The receiver 105 receives the new order information of a printed material serving as an estimation target.

The order information may include the information on the order details related to the specifications or design of the printed material from the purchaser. The information on the order details may include a text or a voice input when the purchaser communicates with the contractor. For example, the receiver 105 receives a free text that is in a mail or an order form exchanged between the purchaser and the contractor and input by the input unit 54 in the management apparatus 14 or a phone voice between the purchaser and the contractor input by the input unit 54 in the management apparatus 14.

The information on the order details may include the information on the presence or absence of the predetermined keyword in the text or the voice input when the purchaser communicates with the contractor. For example, the receiver 105 receives the information on the presence or absence of the predetermined keyword that is obtained by performing a pre-process that extracts the predetermined keyword from the text or the voice input when the purchaser communicates with the contractor.

The order information may include the information identifying the purchaser. The information identifying the purchaser may include information identifying a company as the purchaser and information identifying a person in charge in the company. The receiver 105 receives the name of the company as the purchaser and the ID of the company input by the input unit 54 in the management apparatus 14.

The order information may include the information on the delivery of the printed material. The information on the delivery of the printed material incudes a time period or date indicating the delivery of the printed material. For example, the receiver 105 receives the time period of 14 days or the date "30 in March" input by the input unit 54 in the management apparatus 14.

The order information may include an image related to the specifications or design of the printed material. The image related to the specifications or design of the printed material includes, for example, an image expressing the specifications or design of the printed material. For example, the receiver 105 receives an image expressing the specifications or design of the printed material, input by the input unit 54 in the management apparatus 14.

The estimator 106 uses the learned neural network stored on the model memory 104, estimating the information on the workload of the creation process corresponding to the received order information.

Specifically, the estimator 106 converts a variety of information included in the received order information into data (such as a scalar value or a vector) in terms of a data structure supported by the learned neural network, inputs the conversion data to the learned neural network, and estimates the information on the workload of the creation process from the output from the learned neural network.

The output unit 107 transmits to the management apparatus 14 the information on the workload of the creation process as a result of estimation. In this way, the planning unit 56 in the management apparatus 14 collects the information on the workload of the creation process related to the new order information. The planning unit 56 may plan a schedule of each process subsequent to the creation process in accordance with the information on the delivery of the printed material and the information on the workload of the creation process.

A specific process performed by the information processing system 10 of the exemplary embodiment configurated as described above is described below.

The management apparatus 14 stores the order information on a past printed material on the order record DB 51 while also storing a manufacturing record of the past printed material on the manufacturing record DB 52.

The learning data production unit 53 produces learning data including a pair of a piece of order information on a printed material ordered in the past and a piece of information related to the workload of the creation process and corresponding to the order information.

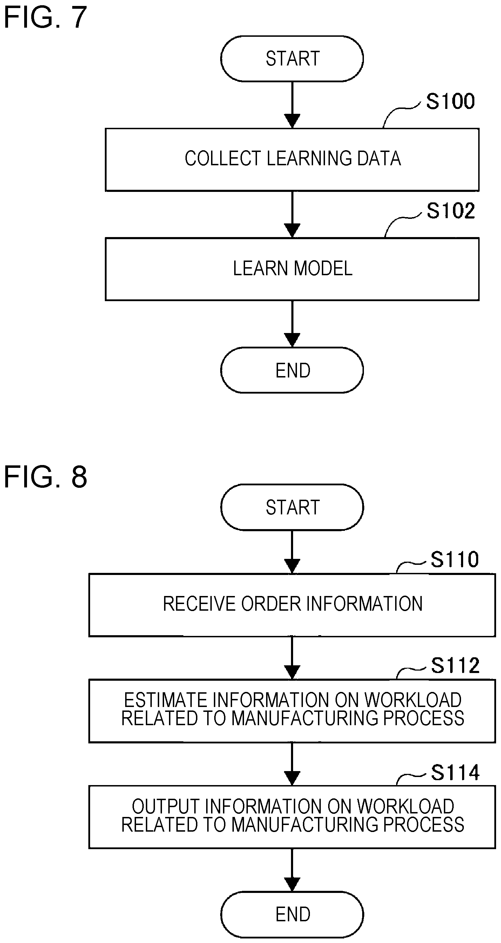

In the server 11, a CPU 14A reads a learning program from a ROM 14B or storage 14D, loads the learning program on a RAM 14C and then executes the learning program. The server 11 thus performs a learning process illustrated in Fig. 7.

In step S100, the CPU 14A operating as the collector 101 collects the learning data, produced by the learning data production unit 53 in the management apparatus 14 and including the pair of the piece of the order information on the printed material ordered in the past and the piece of the information related to the workload of the creation process and corresponding to the order information. The CPU 14A then stores the learning data on the learning data memory 102.

In step S102, the CPU 14A operating as the learner 103 learns, in accordance with multiple pieces of the learning data, a neural network model that receives the order information and estimates the information on the workload of the creation process and then the CPU 14A stores the learned neural network model on the model memory 104 to complete the learning process.

In the management apparatus 14, the input unit 54 receives new order information input by the user.

The planning unit 56 transmits the new order information to the server 11.

In the server 11, the CPU 14A retrieves an estimation program from the ROM 14B or storage 14D, loads the estimation program on the RAM 14C, and executes the estimation program, and thus performs an estimation process illustrated in Fig. 8.

In step S110, the CPU 14A operating as the receiver 105 receives the new order information input by the user and serving as an estimation target.

In step S112, the CPU 14A operating as the estimator 106 estimates the information on the workload of the creation process corresponding to the received order information, using the learned neural network model stored on the model memory 104.

In step S114, the CPU 14A operating as the output unit 107 transmits the estimated information on the workload of the creation process to the management apparatus 14 and ends the estimation process.

The planning unit 56 in the management apparatus 14 acquires the information on the workload of the creation process concerning the new order information. The planning unit 56 may thus plan a schedule of each process subsequent to the creation process, in accordance with the information on the delivery of the printed material and the information on the information on the workload of the creation process.

Through these processes, the workload of the creation process that determines the specifications or design of the printed material is thus predicted in view of the order information of the printed material and the schedule of each process subsequent to the creation process may be planned in accordance with predicted results of the workload of the creation process.

### Modifications

The disclosure is not limited to the exemplary embodiment described above and may be changed or modified without departing from the scope of the disclosure.

According to the exemplary embodiment, the information on the workload of the creation process is estimated by receiving a variety of pieces of the order information. The information on the workload of the creation process may be estimated by receiving only a subset of the pieces of the order information instead of all the pieces of the order information.

According to the exemplary embodiment, the server 11 learns the information on the workload of the creation process while learning the model. The server 11 may be divided into a learner that learns the model and an estimator that estimates the information on the workload of the creation process.

In the exemplary embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

According to the exemplary embodiment, the system is configurated to include multiple apparatuses but alternatively, is configurated to include only a single apparatus having a subset of the functions of the apparatuses.

The process of the printer 12 of the exemplary embodiment may be performed using software, hardware or both. The process of the printer 12 may be stored as a program on a memory and then the memory with the program recorded thereon may be delivered.

The disclosure is not limited to the configuration described above and may be changed or modified without departing from the scope of the disclosure.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   output information on a workload of a creation process corresponding to new order information by inputting to a model the new order information on a printed material, the model being pre-learned such that, when order information on a printed material is input, information on the workload involved in the creation process that determines specifications or design of the printed material is output.
(((2))) In the information processing system according to (((1))), the order information and the new order information include information on order details related to the specifications or the design of the printed material from a purchaser.
(((3))) In the information processing system according to (((2))), the information on the order details includes a text or a voice input when the purchaser communicates with a contractor.
(((4))) In the information processing system according to (((2))), the information on the order details includes information on presence or absence of a predetermined keyword in a text or a voice input when the purchaser communicates with a contractor.
(((5))) In the information processing system according to one of (((1))) through (((4))), the order information and the new order information include information identifying a purchaser.
(((6))) In the information processing system according to one of (((1))) through (((5))), the order information and the new order information include information on a delivery date of the printed material.
(((7))) In the information processing system according to one of (((1))) through (((6))), the order information and the new order information include an image on the specifications or the design of the printed material.
(((8))) In the information processing system according to one of (((1))) through (((7))), the information on the workload involved in the creation process includes a workload related to the whole creation process, a number of changes in the specifications or the design of the printed material or a workload of a creator creating the design of the printed material.
(((9))) A program causing a computer to execute a process, the process including:
   outputting information on a workload of a creation process corresponding to new order information by inputting to a model the new order information on a printed material, the model being pre-learned such that, when order information on a printed material is input, information on the workload involved in the creation process that determines specifications or design of the printed material is output.

According to (((1))), the workload of the creation process may be predicted from the order information of the printed material.

According to (((2))), the workload of the creation process may be predicted in accordance with the order details from the purchaser.

According to (((3))), the workload of the creation process may be predicted in accordance with the text or the voice input when the purchaser communicates with the contractor.

According to (((4))), the workload of the creation process may be predicted in accordance with the text or the voice input when the purchaser communicates with the contractor.

According to (((5))), the workload of the creation process may be predicted in accordance with the information identifying the purchaser.

According to (((6))), the workload of the creation process may be predicted in accordance with the delivery of the printed material.

According to (((7))), the workload of the creation process may be predicted in accordance with the image related to the specifications or design of the printed material.

According to (((8))), the workload of the creation process may be predicted from the order information on the printed material in accordance with the workload of the whole creation process, the number of changes in the specifications or design of the printed material, or the workload of the creator creating the design of the printed material.

According to (((9))), the workload of the creation process may be predicted from the order information of the printed material.

## Claims

1. An information processing system comprising:
a processor configured to:
output information on a workload of a creation process corresponding to new order information by inputting to a model the new order information on a printed material, the model being pre-learned such that, when order information on a printed material is input, information on the workload involved in the creation process that determines specifications or design of the printed material is output.

2. The information processing system according to claim 1, wherein the order information and the new order information comprise information on order details related to the specifications or the design of the printed material from a purchaser.

3. The information processing system according to claim 2, wherein the information on the order details comprises a text or a voice input when the purchaser communicates with a contractor.

4. The information processing system according to claim 2, wherein the information on the order details comprises information on presence or absence of a predetermined keyword in a text or a voice input when the purchaser communicates with a contractor.

5. The information processing system according to one of claims 1 through 4, wherein the order information and the new order information comprise information identifying a purchaser.

6. The information processing system according to one of claims 1 through 5, wherein the order information and the new order information comprise information on a delivery date of the printed material.

7. The information processing system according to one of claims 1 through 6, wherein the order information and the new order information comprise an image on the specifications or the design of the printed material.

8. The information processing system according to one of claims 1 through 7, wherein the information on the workload involved in the creation process comprises a workload related to the whole creation process, a number of changes in the specifications or the design of the printed material or a workload of a creator creating the design of the printed material.

9. A program causing a computer to execute a process, the process comprising:
outputting information on a workload of a creation process corresponding to new order information by inputting to a model the new order information on a printed material, the model being pre-learned such that, when order information on a printed material is input, information on the workload involved in the creation process that determines specifications or design of the printed material is output.

10. An information processing method comprising:
outputting information on a workload of a creation process corresponding to new order information by inputting to a model the new order information on a printed material, the model being pre-learned such that, when order information on a printed material is input, information on the workload involved in the creation process that determines specifications or design of the printed material is output.
